(19) Europäisches Patentamt
European Patent Office
Office européen des brevets

(11) **EP 4 554 120 A1**

(12) **EUROPEAN PATENT APPLICATION**

(43) Date of publication:
**14.05.2025 Bulletin 2025/20**

(21) Application number: **24211086.4**

(22) Date of filing: **06.11.2024**

(51) International Patent Classification (IPC):
**H04J 3/06** (2006.01)

(52) Cooperative Patent Classification (CPC):
**H04J 3/0667; H04J 3/0647**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.11.2023 US 202363547615 P**

(71) Applicant: **Google LLC
Mountain View, CA 94043 (US)**

(72) Inventors:
• **DUKKIPATI, Nandita
Mountain View, California, 94043 (US)**

• **YAP, Kok-kiong
Mountain View, California, 94043 (US)**
• **LI, Yuliang
Mountain View, California, 94043 (US)**
• **RAY, Devdeep
Sunnyvale, California, 94089 (US)**
• **WANG, Weitao
Mountain View, California, 94043 (US)**

(74) Representative: **Betten & Resch
Patent- und Rechtsanwälte PartGmbB
Maximiliansplatz 14
80333 München (DE)**

(54) **CLOCK SYNCHRONIZATION AT SCALE IN DATA CENTERS**

(57) Aspects of the disclosed technology include techniques and mechanisms for performing clock synchronization at scale. A network device may gather, through repeated probe iterations to a swarm of peer network devices, a time indicated by each device. The network device may aggregate the gathered times to determine an offset and drift rate and may use one or more swarm consensus algorithms to determine a consensus time toward which the swarm may move. The swarm may synchronize to the consensus time. The network device may probe one or more time servers to retrieve a time signal indicated therein. The network device may propagate the retrieved time signal to the swarm. The swarm may move toward the time signal.

FIG. 1

EP 4 554 120 A1

**Description**

BACKGROUND

A network of computing devices may coordinate and communicate with one or more other computing devices across a network. The efficiency of the coordination and communication may be based on an accuracy of clock synchronization, such as clocks associated with network devices. For example, network interface card (NIC) clocks may be synchronized using precision time protocol (PTP), such as an end-to-end transparent clock, a peer-to-peer transparent clock, or a boundary clock. In the PTP topologies, clock synchronization may include disseminating time using a tree-based topology where the time passes from a root time server down to the leaves and may require participation from network switches.

However, PTP fails to provide for tight NIC-to-NIC clock synchronization at scale. The PTP tree topology is a constrained topology in that a node error may cause subsequent nodes to diverge from the time distributed by the root time server. The tree structure may limit clock synchronizations between pairwise clocks and may be a brittle topology with respect to fault tolerance. In some instances, the tight coupling between the root time server and network switches used in NIC-to-NIC synchronization may be impacted by a jittery root time server. Further, the accuracy of PTP may depend on hardware components within computing devices in addition to NICs, such as switch oscillators. Therefore, the current industry standard network protocol for clock synchronization fails to provide for sufficiently tight NIC-to-NIC synchronization and fails to provide for NIC synchronization to a universal time coordinate (UTC) for stringent requirements in financial and other at-scale applications.

SUMMARY

Aspects of the disclosed technology include methods, apparatuses, systems, and computer-readable media for clock synchronization at scale in data centers. While the examples described herein discuss internal and external NIC synchronization, the described methods, apparatuses, systems, and computer-readable media may apply to the internal and external synchronization of any network device. For example, network devices may include NICs, switches, hosts, routers, gateways, wireless access points, hubs, bridges, repeaters, modems (e.g., DSL, cable), firewalls, or the like. NIC synchronization is described herein by way of example only and is not meant to be limiting.

A time keeping component, such as a NIC, may execute an internal clock synchronization to achieve NIC-to-NIC synchronization. To do so, the NIC may gather time signals indicated by one or more peer NICs. In some instances, the NIC may use one or more probes to obtain the time signals indicated by the one or more peer NICs. While probing NICs is described herein as a method of retrieving time signals, different methods may be used to obtain time signals. Probing NICs is described herein for illustration purposes only, not limitation. A relationship between the NIC and the one or more peer NICs may be represented on a topological or connected graph, referred to herein a probing graph. Two or more NICs, such as the NIC and a peer NIC, connected via an edge may be referred to as a probing pair, where a probing pair indicates that the NIC periodically obtains a time signal from the peer NIC. In some instances, the NIC may use the connected graph to identify one or more peer NICs by, for example, identifying peer NICs that may be connected to the NIC via an edge.

The NIC may aggregate the gathered time signals to determine pairwise error values. Pairwise error values for each probing pair may indicate a time difference or time error between the NICs that make up the probing pair. The NIC may aggregate a totality of pairwise error values using either a basic swarm consensus algorithm or an accelerated swarm consensus algorithm to identify an offset and drift rate between itself and each of its peers. Based on the offset and drift rate, the NIC may identify a consensus time toward which it should move. The described process ensures that a network of NICs including the one or more peer NICs converges toward the identified consensus time. The internal synchronization described herein may be performed by each NIC of a network of NICS (or each network device of a plurality of network devices) such that each NIC (or network device) adjusts one or more clocks therein.

One or more representative NICs of the swarm may execute an external clock synchronization to achieve NIC-to-UTC synchronization. To do so, the representative NICs may obtain time signals indicated by one or more time servers. In some instances, the representative NICs may obtain the time signals indicated by the one or more time servers by probing the one or more time servers. The representative NICs may identify the one or more time servers to be probed using a topological graph such as a probing graph. The pairs of representative NICs and time servers illustrated on the probing graph may indicate new probing pairs. The representative NICs may analyze the pairwise error values of the new probing pairs and may determine a collective offset and drift rate between time signals indicated by the representative NICs and the time signals indicated by the one or more time servers, where the time signals indicated by the one or more time servers may correspond to a universal time coordinate (UTC). The representative NICs may identify a consensus time toward which the swarm may converge to synchronize with the UTC. The representative NICs may propagate the consensus time to the swarm. The swarm may synchronize with the UTC, thereby achieving NIC-to-UTC synchronization.

One aspect of the disclosure provides for a network device configured to perform clock synchronization, the network device comprising: one or more communication interfaces and one or more processors, wherein the one or more processors are configured to: determine one or more time signals indicated by one or more peer network devices; measure, based on the one or more time signals, an offset and a drift rate of the offset; aggregate the offset and the drift rate using a distributed swarm consensus algorithm; and synchronize, based on the aggregation, the one or more peer network devices.

In the foregoing instance, the one or more processors are further configured to: elect a representative network device of one or more network devices; and obtain, using the elected representative network device and after the network device is elected, a time signal indicating a universal time coordinate (UTC) from a time server.

In the foregoing instances, determining the one or more time signals indicated by the one or more peer network devices further causes the one or more processors to transmit probes to the one or more peer network devices to obtain the one or more time signals.

In the foregoing instances, the one or more processors are further configured to transmit a first probe and a second probe comprising packets indicating timestamps, wherein: the first probe indicates: a first timestamp corresponding to a time the first probe is transmitted from the network device to a peer network device; and a second timestamp corresponding to a time the first probe is received by the peer network device; and the second probe indicates: a third timestamp corresponding to a time the second probe is transmitted from the peer network device to the network device; and a fourth timestamp corresponding to a time the second probe is received by the network device.

In the foregoing instances, the one or more processors are further configured to receive a connected graph, wherein a representation of the network device and a peer network device connected via an edge indicates that the network device periodically obtains a time signal from the peer network device.

According to some examples, the offset indicates one or more time differences between a time signal associated with the network device and the one or more time signals associated with the one or more peer network devices.

According to some examples, the drift rate of the offset indicates a rate of change of the offset.

In the foregoing instances, the one or more processors are further configured to determine, using a regression model and for each combination of the network device and a peer network device of the one or more peer network devices, the offset and drift rate between a clock signal associated with the network device and a clock signal associated with the peer network device.

According to some examples, the one or more processors are further configured to synchronize the network device and the one or more peer network devices using basic swarm consensus; and the basic swarm consensus comprises determining an estimated offset from multiple swarm virtual clock values based on the one or more time signals associated with the one or more peer network devices.

In the foregoing instances, synchronizing the network device and the one or more peer network devices using the basic swarm consensus further causes the one or more processors to: determine a local average of the offset and the drift rate of each peer network device of the one or more peer network devices; and adjust a clock signal associated with the network device toward a common time indicated by the swarm virtual clock values.

According to some examples, the one or more processors are further configured to synchronize the network device and the one or more peer network devices using accelerated swarm consensus; and the accelerated swarm consensus comprises determining an estimated offset from swarm virtual clock values based on: the one or more time signals associated with the one or more peer network devices; and one or more time signals associated with one or more nested peer network devices.

In the foregoing instances, synchronizing the network device and the one or more peer network devices based on the accelerated swarm consensus further causes the one or more processors to: perform, using a mesh effect, nested probing iterations between the network device, the one or more peer network devices, and the one or more nested peer network devices, wherein the one or more nested peer network devices correspond to additional peer network devices of the one or more peer network devices; determine an offset from a common time indicated by the swarm virtual clock values; and adjust a clock signal associated with the network device toward the common time indicated by the swarm virtual clock values.

In the foregoing instances, the distributed swarm consensus algorithm is based on an average of pairwise measured offsets from the swarm virtual clock values and between: the network device and a peer network device of the one or more peer network devices; and the network device and a nested peer network device of the one or more nested peer network devices.

Another aspect of the disclosure provides for a method for performing clock synchronization, the method comprising: determine, by a network device, one or more time signals indicated by one or more peer network devices; measure, by the network device and based on the one or more time signals, an offset and a drift rate of the offset; aggregate, by the network device, the offset and the drift rate using a distributed swarm consensus algorithm; and synchronize, by the network device and based on the aggregation, the one or more peer network devices.

According to some examples, the method further comprises obtaining, from one or more time servers, one or more time signals indicated by the one or more time servers; determining a consensus universal time coordinate (UTC) based on the one or more time signals indicated by the one or more time servers; determining the offset and the drift rate from the UTC; and synchronizing the one or more peer network devices to the UTC.

According to some examples, the method further comprises transmitting, by the network device, probes to the one or more peer network devices to obtain the one or more time signals indicated by the one or more peer network devices.

According to some examples, the method further comprises transmitting a first probe and a second probe comprising packets indicating timestamps, wherein: the first probe indicates: a first timestamp corresponding to a time the first probe is transmitted from the network device to a peer network device; and a second timestamp corresponding to a time the first probe is received by the peer network device; and the second probe indicates: a third timestamp corresponding to a time the second probe is transmitted from the peer network device to the network device; and a fourth timestamp corresponding to a time the second probe is received by the network device.

According to some examples, the method further comprises synchronizing the network device and the one or more peer network devices using basic swarm consensus, wherein the synchronizing comprises: determining a local average of the offset and the drift rate of each peer network device of the one or more peer network devices, wherein the local average corresponds to a common time indicated by swarm virtual clock values; and adjusting a clock signal associated with the network device toward the common time indicated by the swarm virtual clock values.

According to some examples, the method further comprises synchronizing the network device and the one or more peer network devices based on accelerated swarm consensus, wherein the synchronizing comprises: performing, using a mesh effect, nested probing iterations between the network device, the one or more peer network devices, and one or more nested peer network devices, wherein the one or more nested peer network devices correspond to additional peer network devices of the one or more peer network devices; determining, for each peer network device and each nested peer network device, an offset from a common time indicated by swarm virtual clock values; and adjusting a clock signal associated with the network device toward the common time indicated by the swarm virtual clock values.

Another aspect of the disclosure provides for a system for performing clock synchronization, the system comprising: a plurality of network devices; and one or more peer network devices, wherein the plurality of network devices comprises the one or more peer network devices, and wherein a network device comprises one or more processors configured to: determine one or more time signals indicated by the one or more peer network devices; measure, based on the one or more time signals, an offset and a drift rate of the offset; aggregate the offset and the drift rate using a distributed swarm consensus algorithm; and synchronize, based on the aggregation, the one or more peer network devices.

BRIEF DESCRIPTION OF THE DRAWINGS

FIG. 1 illustrates an example block diagram of clock synchronization at scale in data centers, in accordance with aspects of the disclosure.

FIG. 2 illustrates an example graph for performing clock synchronization at scale in data centers, in accordance with aspects of the disclosure.

FIG. 3 illustrates an example probing graph for performing clock synchronization at scale in data centers, in accordance with aspects of the disclosure.

FIG. 4 illustrates an example piecewise linear regression algorithm used for clock synchronization at scale in data centers, in accordance with aspects of the disclosure.

FIG. 5 illustrates an example swarm consensus generated using a swarm virtual clock for performing clock synchronization at scale in data centers, in accordance with aspects of the disclosure.

FIG. 6 illustrates an example of accelerated swarm consensus for performing clock synchronization at scale in data centers, in accordance with aspects of the disclosure.

FIG. 7 illustrates an example of external synchronization for performing clock synchronization at scale in data centers, in accordance with aspects of the disclosure.

FIG. 8 illustrates a flow diagram for an example method of performing cloud synchronization at scale in data centers, in accordance with aspects of the disclosure.

FIG. 9 illustrates a flow diagram for an example method of performing cloud synchronization at scale in data centers, in accordance with aspects of the disclosure.

FIG. 10 illustrates a block diagram of an example computing environment for performing cloud synchronization at scale in data centers, in accordance with aspects of the disclosure.

DETAILED DESCRIPTION

Aspects of the disclosed technology include techniques and mechanisms for performing clock synchronization at scale. A network device may gather, through repeated probe iterations to a swarm of peer network devices, a time indicated by each device. The network device may aggregate the gathered times to determine an offset and drift rate and may use one or more swarm consensus algorithms to determine a consensus time toward which the swarm may move. The swarm may synchronize to the consensus time. The network device may probe one or more time servers to retrieve a time signal indicated therein. The network device may propagate the retrieved time signal to the swarm. The swarm may move toward the time signal.

This technology relates to performing clock synchronization at scale in data centers. While the examples described herein discuss internal and external NIC synchronization, the described methods, apparatuses, systems, and computer-readable media may apply to the internal and external synchronization of any network device. For example, network devices may include NICs, switches, hosts, routers, gateways, wireless access points, hubs, bridges, repeaters, modems (e.g., DSL, cable, etc.), firewalls, or the like. NIC synchronization is described herein by way of example only and is not meant to be limiting.

A building block of performing network interface card (NIC) clock synchronization may be measuring an offset between different NICs and reducing the measured offset to bring the NICs closer to a consensus time, such as a universal time coordinate (UTC). To do so, a system may utilize swarm consensus strategies and mesh-based probing graphs to achieve NIC synchronization. For example, a network of NICs may comprise one or more NICs. Each NIC within the network may have one or more peers, such as one or more peer NICs. A NIC may exchange probes with one or more peers. The probes may be used to measure a time signal disseminated from a destination NIC and may report the measured time signal to an origin NIC. The combination of the origin NIC and the destination NIC may be referred to as a probing pair. Additional probes may be transmitted between the origin NIC and different destination NICs to continuously measure offsets between NICs within the network of NICs.

In some instances, the origin NIC may be referred to as a network device and the destination NIC may be referred to as a peer network device. As such, the probing pair may include the network device and the peer network device. The network device may probe the peer network device to determine a time signal associated with the peer network device. The transmitted probe may include packets that indicate timestamps. The timestamps may indicate times when probes are transmitted and times when the probes are received. For example, where the network device and the peer network device transmit probes back and forth, the timestamps may indicate four times: (1) a first time that the network device transmits a first probe to the peer network device; (2) a second time that the peer network device receives the first probe; (3) a third time that the peer network device transmits a second probe to the network device; and (4) a fourth time that the network device receives the second probe. The network device (or the peer network device) may use the timestamps within the probes to determine the time indicated by the peer network device (or the network device).

The probing pairs may be represented in a topological graph, such as a probing graph. The probing graph may include one or more nodes and edges. Each node may represent a NIC or network device. Edges may be used to connect a pair of nodes, where a pair of nodes connected via an edge corresponds to a probing pair. A representation of a probing pair may indicate that the nodes connected via an edge are peers. The representation of the probing pair may further indicate that the nodes within the probing pair periodically exchange probes.

In some instances, the probing graph may be generated by a NIC within the network of NICs (or by a network device of the plurality of network devices). In some instances, one or more NICs (or network devices) may generate probing graphs. Additionally or alternatively, the probing graph may be generated by a computing device outside of the network of NICs (or outside of the plurality of network devices). In such instances, the network of NICs may receive the probing graph from the computing device and may use the probing graph to identify peers that should be probed. Further, in some instances, a network controller may generate the probing graph and may communicate with each NIC (or network device). The network controller may identify, for each NIC (or network device), peers NICs (or peer network devices).

The process of internal synchronization described herein may cause the network of NICs or network devices to converge toward a consensus time. A plurality of swarm virtual clock (SVC) values may be used to determine the consensus time toward which all of the probed NICs may converge. The probed NICs that converge toward the SVC values may be referred to herein as a swarm. The probed NICs may be grouped using a mesh effect, where the mesh effect includes one or more closed-loops of clocks, where the closed-loops may provide more opportunities to detect and reduce clock inconsistencies across the network of NICs and may be configured to mitigate accumulations of probing pair-wise errors. The internal synchronization may include probing the network of NICs. Each NIC within the network of NICs may converge towards the consensus time. Each NIC within the network of NICs may be configured to perform the described internal synchronization and may be configured to adjust the one or more time signals indicated by the one or more clocks therein. An external synchronization may include synchronizing the swarm with UTC.

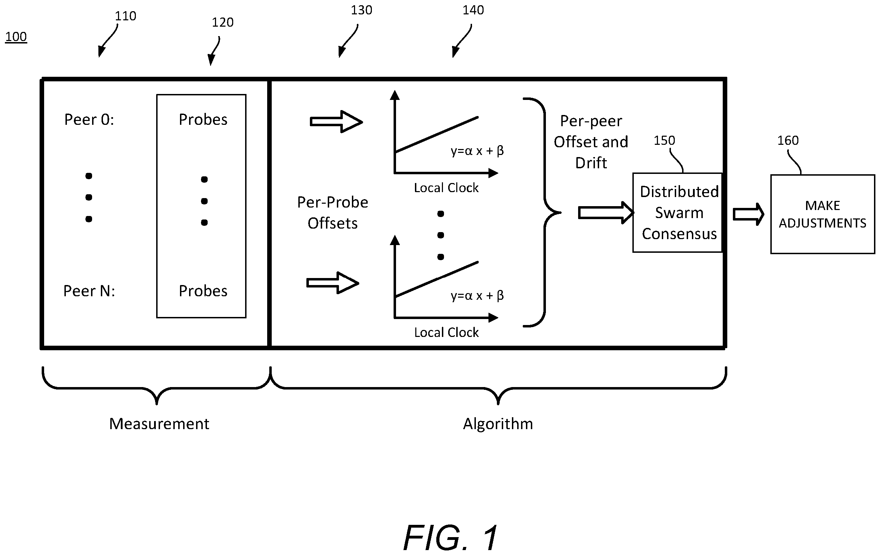

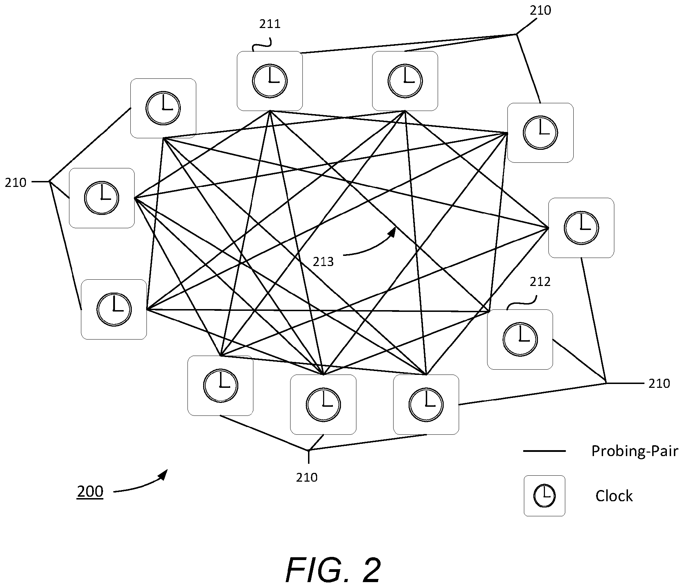

FIG. 1 illustrates an example block diagram of clock synchronization at scale in data centers, in accordance with aspects of the disclosure. The process illustrated in FIG. 1 may be described in connection with FIGS. 2-7. The process illustrated in clock synchronization 100 may be performed using computing devices such as the network of NICs, one or more time servers, a transparent clock (TC), or the like. In some instances, the TC may be used during execution of the internal synchronization. A NIC may read a time signal from each peer by probing each peer NIC, as discussed below. Transmitting probes across the network of NICs and receiving information from the transmitted probes may result in queueing delays. The TC may analyze the queueing delays and report a total queuing delay on a probe path between two or more NICs. The transmission of data between NICs and using the probes may leverage precision time protocol (PTP), which may reduce the number of probes needed to perform data packet transmission.

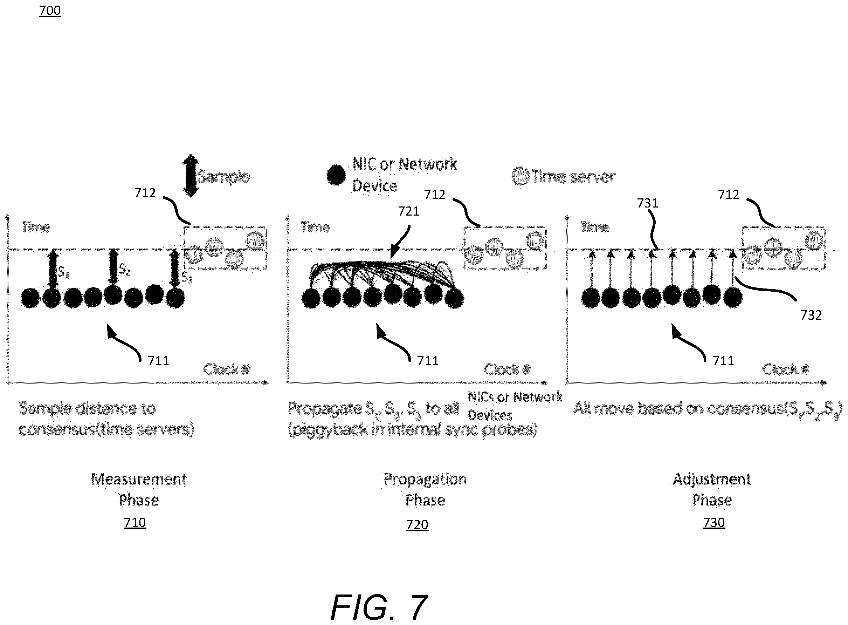

Clock synchronization 100 may illustrate the internal NIC-to-NIC synchronization. The internal synchronization may be executed by one or more NICs of the network of NICs. In some instances, each NIC within the network of NICs (or network device of the plurality of network devices) may be configured to perform the internal synchronization illustrated in FIG. 1. The external synchronization, illustrated in FIG. 7 and discussed below, may be executed by one or more representative NICs selected from the network of NICs (or one or more representative network devices of the plurality of network devices). The representative NICs or network devices may be randomly or dynamically selected such that each external synchronization is performed by different representative NICs or network devices.

In contrast to traditional tree-like clock synchronization solutions, clock synchronization may be viewed as a consensus problem where pairwise errors may be identified and reduced. Pairwise errors may refer to clock synchronization misalignment pertaining to probing pairs. Pairwise errors may be generated during the internal synchronization by transmitting one or more probes to one or more peer NICs within the network of NICs. Each NIC within the network of NICs may be referred to as a peer, such that a single NIC may have at least one peer. Within the network of NICs, a probe may be transmitted from a first NIC, such as an origin NIC, to a second NIC, such as a destination NIC. The probe may read the time signal disseminated by the origin NIC as well as the time signal disseminated by the destination NIC, and may share the read time signals with both the origin and destination NICs. The origin and destination NICs may use the time signals to determine an offset and drift rate of the probing pair. The NICs within the network of NICs may continuously probe between different combinations of NICs, where each combination may include a peer NIC. This may be referred to as NIC-to-NIC probing and may be performed without switch oscillators. In some instances, each NIC may use the probing graph to identify peers to be probed.

To determine per-peer offsets and drift rates between at least two NICs, a NIC may use a connected graph, such as a mesh-based probing graph, to identify one or more peers. FIG. 2 illustrates an example probing graph for performing clock synchronization at scale in data centers, in accordance with aspects of the disclosure. Probing graph 200 illustrates the NIC clocks with the network of NICs, also referred to above as peers. Each edge between a pair of NICs (or peers) may indicate a probing pair. Each probing pair may indicate two NICs that may periodically exchange probes to read the time signals indicated therein. In some instances, each NIC within the network of NICs may be configured to generate a probing graph that may be used to identify peers. However, in some instances, the NICs within the network of NICs may be configured to receive the probing graph from a different network or computing device, and may be configured to use the received probing graph to identify peers.

Each edge may indicate a pair of NICs between which a probe was used to measure the time signals disseminated by each NIC. The NICs illustrated in probing graph 200 may be spread into different superblocks and racks. Probing graph 200 may include representations of the one or more NICs connected via edges, where a representation of a first NIC and a representation of a second NIC connected via an edge may indicate a probing pair. The first and second NICs may be in different superblocks and racks. Superblocks may be used to spread peer NICs and may refer to a subset of a network that may be associated with a geographical location.

In some instances, the probing graph may include representations of the network device and one or more peer network devices connected via edges, where the network device and the peer network device connected by an edge may indicate a probing pair.

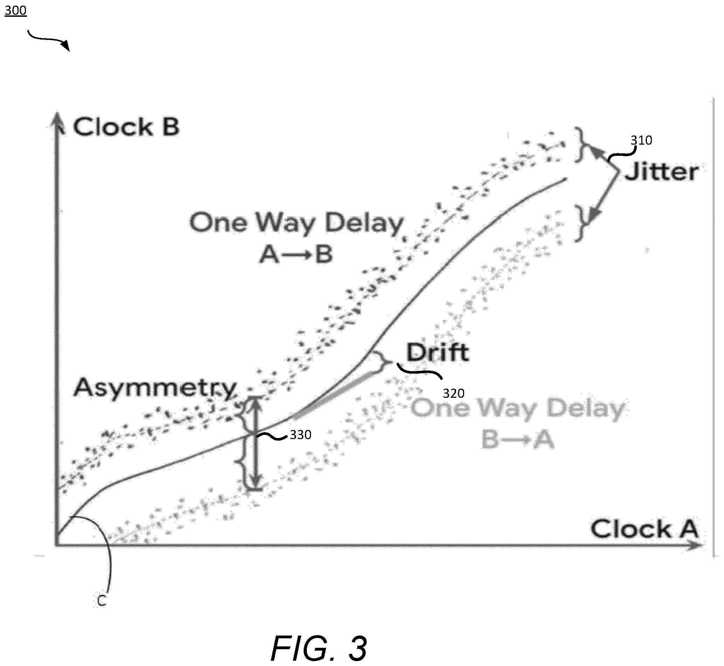

FIG. 3 illustrates an example graph for performing clock synchronization at scale in data centers, in accordance with aspects of the disclosure. In particular, FIG. 3 illustrates errors that may arise when performing clock synchronization and implications of the errors. As illustrated in graph 300, times measured from an origin NIC clock, such as clock A, may be plotted against times measured from a destination NIC clock, such as clock B, to generate a two-dimensional representation of the measured times. To plot the measured times, a coordinate pair may represent (timestamp at clock A, timestamp at clock B) for each iteration of NIC-to-NIC probing. The line drawn between the plotted points may be used to map the measured times. Further, the graph of measured times may be used to measure inherent errors that may be encountered when performing clock synchronization, such as jitter, drift, and asymmetry.

Jitter may refer to normal distribution of plotted points within a graph. Each timestamp plotted in graph 300 may experience jitter and, in some instances, queuing delays may also introduce jitter. In some instances, jitter may derive from timestamping jitter, which may be a result of normal distribution. Jitter may be filtered using statistical methods, such as linear regression, queueing delays if there are intermediate hops, or the like.

In some instances, jitter may be filtered using the TC. For example, a TC-enable switch may add a residence time of each transmitted data packet to a correction field (CF) within the header of the data packet. The residence time may be based on a receiver that may know a total in-switch residence time along a path. This may provide for filtering based on the impact of queueing delays.

Further, in some instances, jitter may be filtered using round-trip time (RTT) filtering. If the RTT of a pair of forward and backward probes is close to a base RTT, such as zero-queueing RTT, then both the forward and backward probe may experience near-zero queueing. Probes that experience an RTT that is greater than the base RTT may be filtered out. The base RTT may be determined based on a historical minimum RTT.

Drift may refer to errors that are, generally, generated by oscillator drifts, such as when an oscillator runs faster or slower than expected. The outcome of the oscillator drifts may be reflected as a curve in the mapped times, such as curve C illustrated in graph 300 between the plotted points. For example, drift may refer to errors resulting from performing piecewise linear fitting of a curved graph of plotted probing pairs. Curve C may be the result of fitting the plotted points determined by piecewise linear algorithms.

Asymmetry may refer to a forward delay and a backward delay between clocks A and B. In some instances, asymmetry may refer to a forward delay and a backward delay of a probe transmission between the first NIC of a probing pair and the second NIC of the probing pair. Asymmetry may be a static error, where jitter and drift may be dynamic errors. Asymmetry may be caused by hardware components within a computing device that may experience unequal bidirectional delay, such as transceivers, and that may have different forward and backward transmission paths.

In some instances, asymmetry may be caused by different cable lengths associated with different paths. Asymmetry may be removed using a peer-to-peer (PTP) TC. A standard TC may be extended to include a link delay within the CF of a data packet header. This may inform the receiver of an approximate total delay that the data packet spent in all switches and links along the path. If a path's cable is longer than that of a different path, then the difference may be reflected in the CF of each data packet that traverses both paths, thereby allowing the impact of cable-length asymmetry to be quantified. Switch software may be needed to measure the link delay of each peer network device and to store RTT/2 of each link.

In some instances, path profiling may be used to identify symmetric paths, thereby circumventing the need for switch software with end-to-end path profiling. Profiling probes with different flow labels may be transmitted between network devices to explore different types of paths, such as equal-cost multipaths (ECMPs), weighted cost multipaths (WCMPs), or the like. The lowest delay path in either direction may be selected, and the selected path may be used to route data packets.

When transmitting one or more probes from an origin NIC to a destination NIC, a probe may take one or more paths. This may welcome asymmetry errors within the network of NICs. In some instances, asymmetry errors may be reduced using peer-to-peer (P2P) delay support where all switches along a path may aggregate all delays along a probe path to differentiate a delay difference between one or more probe paths, thereby filtering out the asymmetry. Further, in some instances, asymmetry errors may be reduced by transmitting a probe over a symmetric probe path. For example, using P2P delay support, the time server may select a probe path with a lowest aggregated delay, such as a path that may be symmetric in both directions, and may transmit probes across the selected probe path. Moreover, in some instances, a network controller may configure symmetric routing paths for one or more probes.

The errors determined from the graph, such as graph 300, may be specific to the NICs that were probed, but might not represent a consensus of errors across the network of NICs. The errors may identify per-probe offsets, as identified in FIG. 1. For example, each plotted point, when compared to the fitted curve, may indicate the asymmetry of a particular probing pair and each plotted point and, when viewed in comparison to other plotted points, may indicate a jitter level and drift level associated with the particular probing pair. However, clock synchronization may require that the identified errors be viewed across all peers such that the errors are averaged to account for each peer and the errors associated therewith. In other words, clock synchronization may require per-peer offsets and drift rates, as identified in FIG. 1.

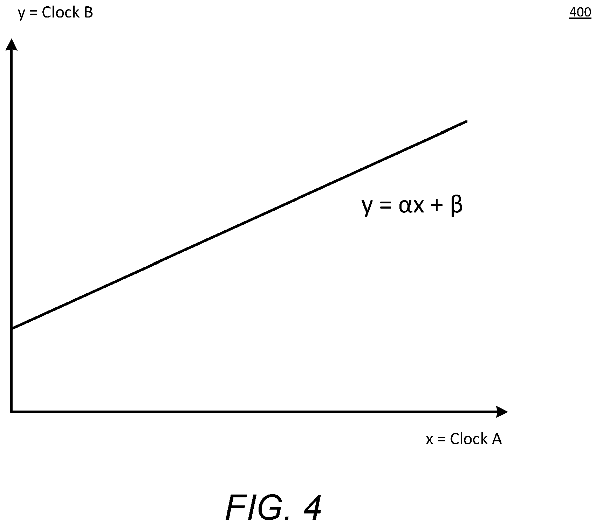

The network of NICs, also referred to herein as a swarm, may perform a pairwise measurement on each edge of the probing graph. The swarm may use one or more piecewise linear regression algorithms to perform the pairwise measurement on each edge. FIG. 4 illustrates an example piecewise linear regression algorithm used for clock synchronization at scale in data centers, in accordance with aspects of the disclosure. Algorithm 400 represents an example linear algorithm that may be used to perform a linear regression analysis on one or more probing pairs. The linear mapping may be represented as $y = \alpha x + \beta$. Referring to the algorithm, x may refer to a first NIC clock signal of a probing pair, such as clock A, and y may refer to a peer of x. Further, y may correspond to a second NIC clock signal of the probing pair, such as clock B. $\beta$ may refer to an offset between x and y, and $\alpha$ may refer to a drift rate of $\beta$. In some instances, x may refer to the network device of the probing pair and y may refer to the peer network device of the probing pair. A clock signal may correspond to a counter within the NIC (or network device). The clock signal may constantly change such that a different clock signal value may be returned each time a clock signal is read.

The offset may indicate a difference in the times measured from each clock at a given instant. The drift rate of the offset may indicate a rate of change of the offset, such as how quickly the offset increases or decreases. In some instances, the offset may indicate a difference between a time associated with the network device and a time associated with the peer network device. As such, in some instances, the drift rate of the offset may indicate a rate of change of the offset between the network device and the peer network device.

The pairwise measurements may be determined per probing pair. An outcome of the linear regression analysis may be a numerical representation of a relationship between the NICs associated with the analyzed probing pair. In some instances, the relationship between the NICs may indicate a numerical representation of the time difference between the NICs. Further, in some instances, the pairwise measurements may represent pairwise errors between NICs. Pairwise errors may be reduced by moving the swarm toward a swarm consensus, such as a common swarm time. Doing so may allow the swarm to average all errors across the probing pairs, such that the averaged errors may reduce the overall offsets associated with each NIC. The common swarm time may be dictated by swarm virtual clock (SVC) values, where the SVC values may indicate or estimate a common time toward which the NICs are moving or may be made to move using swarm consensus.

In some instances, the pairwise measurements may be numerical representations of a time difference between one or more network devices, such between a network device and a peer network device. The pairwise errors represented by the pairwise measurements may be reduced by averaging a totality of pairwise errors associated with different combinations of the one or more network devices. Averaging the totality of pairwise errors may be based on executing a basic swarm consensus algorithm to synchronize the network device and the peer network device. The averaged pairwise error values may be used to estimate an offset from the common swarm time indicated by the SVC values.

The SVC values may be considered stable timekeepers as they drift at an average drift rate across all NICs associated with the probing pairs. Further, the SVC values may decouple the swarm from errors of time servers, thereby safeguarding the NICs from time server errors. In some instances, the SVC values may safeguard the NICs from large jitter. For example, the SVC values may reflect measured offsets associated with time servers over a predetermined period of time and may smooth out the jitter. Further, the SVC values may safeguard the NICs from a large offset from UTC. For example, over time, the swarm time dictated by the SVC values may move closer to UTC such that the consensus of the swarm may be closer to UTC. In some instances, the SVC values may also safeguard the NICs against time server failures. For example, stability of the SVC values may provide for a prolonged period of time to detect and to react to time server failures without the NICs synchronizing with time outputs of malfunctioning time servers.

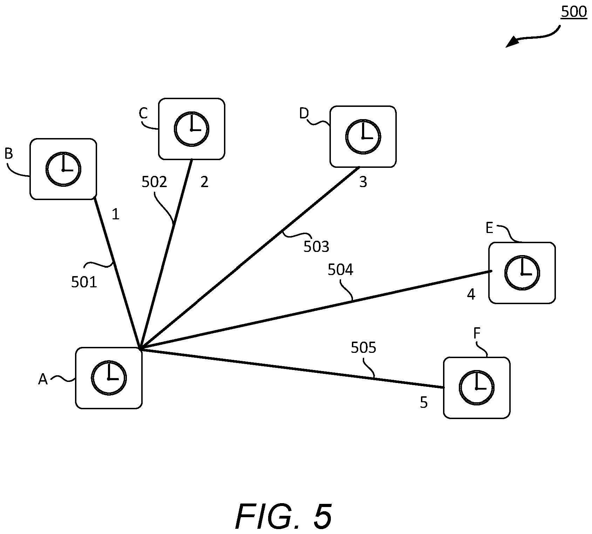

Averaging the errors across probing pairs may permit each NIC (or network device) within the swarm to adjust the time indicated therein. In some instances, each NIC (or network device) may move toward the swarm consensus time. To do so, the NICs (or network devices) within the swarm may use a swarm consensus algorithm. FIG. 5 illustrates an example swarm consensus generated using SVC values for performing clock synchronization at scale in data centers, in accordance with aspects of the disclosure. Basic swarm consensus 500 illustrates a subset of the NICs (or peers) illustrated in probing graph 200. The subset is illustrated solely for ease of explanation and is not meant to be limiting as more or fewer peers may be included in the subset of peers. As illustrated in basic swarm consensus 500, NIC A may have peers B-F and, as such, the probing pairs may correspond to A-B, A-C, A-D, A-E, and A-F. Each probing pair may be associated with a numerical value, indicated in FIG. 5 by the numbers 1-5. The numerical value associated with each probing pair may indicate an error value of the NICs (or peers) therein. As discussed in connection with FIG. 4, in some instances, the numerical value associated with each probing pair may be determined through a linear regression analysis and may indicate a pairwise error value.

Basic swarm consensus 500 may average the pairwise error values illustrated in the subset of NICs (or peers) to estimate an offset from the common time indicated by the SVC values. To do so, the swarm may determine an average of the output values of the linear regression analyses. For example, an estimated offset from the common time indicated by the SVC values under basic swarm consensus may be determined by calculating a local average of the pairwise error values using local peer info illustrated in basic swarm consensus 500, such as (1 +2+3+4+5)/5. As discussed in detail below, each NIC may use the estimated offset from the SVC values to gauge the accuracy of the clock therein and, depending on the estimated offset, may continuously execute the internal synchronization described above to further reduce the estimated offset. For example, in some instances, the swarm may continuously execute the described internal synchronization until the estimated offset is equal to zero, thereby indicating a time associated with the swarm is the same as the time indicated by the SVC values. Further, based on identifying a point of convergence of the swarm, the swarm may elect one or more representative NICs to execute an external synchronization of the swarm to UTC, as discussed in detail below.

In some instances, and using basic swarm consensus 500, each network device may determine an offset and a drift rate between itself and each peer network device, and may determine a local average of the offsets and drift rates. The local average may be treated as an estimated time signal indicated by the SVC values. The network device may adjust the time indicated therein toward the SVC values to achieve swarm consensus.

In some instances, the swarm consensus algorithm that is used in the internal synchronization may be an accelerated swarm consensus that may feature a mesh-based clock synchronization mechanism. A mesh effect may correspond to a data structure of NICs where each NIC is linked to another such that the data structure may be a closed loop. For example, probing graph 200 may correspond to a closed loop data structure. The pairwise errors determined for each probing pair illustrated in probing graph 200 may be accumulated to determine a comprehensive error value for the closed loop, where the comprehensive error value may detect errors within the entire closed loop. The comprehensive closed loop error value may be determined using accelerated swarm consensus.

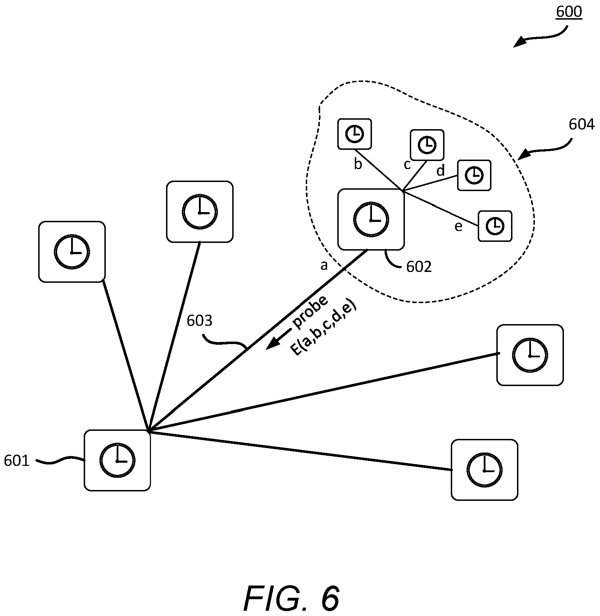

FIG. 6 illustrates an example accelerated swarm consensus for performing clock synchronization at scale in data centers, in accordance with aspects of the disclosure. Accelerated swarm consensus 600 may build upon basic swarm consensus 500 in that each peer within the subset of NICs may further probe additional peers to determine pairwise differences associated with one or more additional probing pairs. In some instances, accelerated swarm consensus 600 may include probing one or more nested peer network devices (or one or more nested peer NICs), where the one or more nested peer network devices are peers of peers. Each of the one or more nested peer network devices (or NICs) may have a time indicated therein.

In some instances, accelerated swarm consensus 600 may build upon swarm consensus 500 in that, in addition to probing one or more peers NICs (or peer network devices), accelerated swarm consensus 600 provides for probing peers of peers (or nested peers) to determine the time indicated therein.. In some instances, the network device (or the NIC) may use the probing graph to identify one or more nested peers. Additional network device probing pairs may be identified using the probing graph and the additional network device probing pairs may be used to determine further pairwise differences between the times read from each network device.

While FIG. 6 illustrates two levels of nested peer network devices and two levels of nested probe iterations, it should be noted that more than two levels of nested peer network devices may be used for accelerated swarm consensus and more than two iterations of nested probing may be executed. For example, additional probes may be transmitted to an Nth degree of nested peers. In some instances, nested probe iterations may be executed between the network device, one or more peer network devices, and one or more nested peer network devices. Each nested probe iteration may be used to determine, for each peer network device and each nested peer network device, an offset from the common time indicated by the SVC values. Each additional probe may consider the pairwise differences generated during previous probe iterations. The nested probe iterations may provide for a comprehensive overview of various pairwise differences associated with different combinations of NICs, thereby furthering the mesh effect that the swarm may achieve in a limited period of time.

Therefore, because each nested probe may include an offset between the time signal indicated by the current network device (or NIC) and the common time indicated by the SVC, each iteration of a nested probe may include the determined offsets of each network device (or NIC) that previously received the same probe. For example, each network device (or NIC) that receives a probe may piggyback its information onto the received probe prior to transmitting the probe to the origin NIC or network device, to a predetermined destination NIC or network device, or to another NIC or network device identified through a NIC or network device selection procedure. As such, each subsequent network device (or NIC) that receives the probe may read the offsets of each of the previously probed network devices (or NICs). In some instances, the offsets gathered during a probe iteration may include a difference in time signals between the network device (or NIC) and a peer network device (or peer NIC), a difference in time signals between the network device (or NIC) and a nested peer network device (or nested peer NIC), or the like. In some instances, the offsets gathered during a probe iteration may further include an offset between the network device and the SVC values, each peer network device and the SVC values, each nested peer network device and the SVC values, or the like.

Accelerated swarm consensus 600 may be executed using one or more distributed swarm consensus algorithms, as identified in FIG. 1. For example, an example distributed swarm consensus algorithm may be

$$O_{swarm}(X) = \frac{1}{NumPeers(X)} \sum_{Y \in Peers(X)} (\beta(X,Y) + O_{swarm}(Y))$$

. The swarm may use the example distributed swarm consensus algorithm to estimate an offset of each node X from the swarm using $\beta(X,Y)$ and $O_{swarm}(Y)$, where $\beta(X,Y)$ may be a pairwise measured offset from a peer Y and where $O_{swarm}(Y)$ may be a peer estimate of a swarm offset. In some instances, $\beta(X,Y)$ may be a pairwise measured offset between the network device and the peer network device. The distributed algorithm may be used to determine each network device's offset from the average offset determined by basic swarm consensus 500 using pairwise differences. In some instances, $O_{swarm}$ may move toward a swarm consensus average and the convergence time may be proportional to a diameter of a graph, such as probing graph 200. The swarm may continuously execute the distributed swarm consensus algorithm and move the network of NICs (or network devices) toward a consensus time to reduce $O_{swarm}$ to zero.

In some instances, accelerated swarm consensus 600 may include determining an average offset from the SVC values based on the offsets gathered during each probe. For example, each probe iteration may gather information from a network device (or NIC) indicating an offset between the time indicated therein and the SVC values. Accelerated swarm consensus 600 may determine an average of all of the offsets determined during a totality of probe iterations. The average offset may indicate an offset of the swarm from the SVC values. Accelerated swarm consensus 600 may further include adjusting the time signal of the network device (or NIC).

Each network of the plurality of network devices (or each NIC within the network of NICs) may be configured to perform internal synchronization using accelerated swarm consensus 600. As such, each network device (or NIC) may use the output of the distributed swarm consensus algorithm to adjust the time indicated therein. 1.

The process described to this point may correspond to the internal synchronization. The net effect of internal sync may be the network of NICs (or the plurality of network devices) approaching a virtual aggregate clock (VAC) value, thereby converging around the average offset and frequency of the network of NICs (or the plurality of network devices). The swarm may repeatedly execute the internal synchronization at determined time periods, such as every two seconds, thirty seconds, one minute, etc. In some internal synchronization iterations, the swarm may execute accelerated swarm consensus to provide for faster convergence of the network of NICs (or network devices). For example, in some instances, the swarm may configure the internal synchronization to tighten NIC-to-NIC synchronization such that the NIC-to-NIC offset is reduced to a predetermined time frame, such as less than 20ns.

Based on pushing the network of NICs (or network devices) toward a point of convergence, the swarm may undergo external synchronization. The external synchronization may include synchronizing the swarm to a timestamp indicated by one or more time servers. In some instances, the network device (or NIC) performing external synchronization may determine a consensus universal time coordinate (UTC) based on the one or more time signals received from the one or more time servers. While the internal synchronization may be executed at regularly scheduled time frames, the external synchronization may be executed with less frequency. To synchronize the network of NICs to UTC, one or more time servers may be considered a single group and the network of NICs may be considered a different group. The group including the network of NICs may be used to measure an external offset or drift from the group of one or more time servers.

The external synchronization may be performed by one or more representative NICs of the network of NICs. In some instances, the external synchronization may be performed by one or more representative network devices of the one or more network devices. The representative NICs or, more generally, the representative network devices may be randomly or dynamically selected such that each external synchronization may be performed by different representative NICs or, more generally, by different network devices. In some instances, each network device (or NIC) may perform the described external synchronization.

FIG. 7 illustrates an example external synchronization for performing clock synchronization at scale in data centers, in accordance with aspects of the disclosure. As illustrated in FIG. 7, the external synchronization may be divided into three phases: a measurement phase, a propagation phase, and an adjustment phase. The measurement phase may occupy a majority of the external synchronization run time. During the measurement phase, the representative NICs or representative network devices may exchange probes with each time server of the one or more time servers. Each probe may be used to measure a pairwise error between a time server and the swarm. A totality of pairwise errors may be aggregated such that the representative NICs or representative network devices may take a consensus of external offsets and drift rates from the one or more time servers.

In some instances, each NIC or network device may be configured to perform the described external synchronization. As such, each NIC or network device may probe the one or more time servers and may determine the consensus of external offsets and drift rates from the one or more time servers.

While probing is described herein as a method of obtaining time signals from the one or more time servers, it should be noted that additional or alternative data transmissions methods may be used to request and receive time signals from the one or more time servers. Probing the one or more peer network devices is described herein by way of example, not limitation.

During the propagation phase, the representative NICs or representative network devices may propagate, to each NIC or network device, the offsets and drift rates from the one or more time servers. In doing so, the representative NICs or representative network devices may share with the swarm all information transmitted to the one or more time servers and all information received from each time server during each probe.

The representative NICs or representative network devices may transmit and receive any number of probes during the propagation phase. Therefore, to continuously transmit information between the representative NICs or network devices and the one or more time servers using the probes, each time server may piggyback its information onto a received probe prior to transmitting the probe to the origin NIC or network device, to a predetermined destination NIC or network device, or to another NIC or network device identified through a NIC or network device selection procedure. This may further reduce a number of probes needed to collect time data from the one or more time servers. The representative NICs or network devices may aggregate a totality of offsets and drift rates received from the one or more time servers. The aggregation process may include determining a consensus time of the received offsets and drift rates, such as a time that represents a point of convergence across the network of NICs.

During the adjustment phase, the representative NICs or network devices may adjust the time therein based on the consensus time determined during the propagation phase. Further, during the adjustment phase, each NIC or network device that received information from the representative NICs or network devices may adjust the time therein to match the consensus time determined during the propagation phase. As such, the swarm may, over time, collectively reach a point of convergence towards the UTC.

In some instances, one or more NICs within the network of NICs might not receive the information associated with one or more probes transmitted throughout the network during the external synchronization. Consequently, the one or more NICs might not receive offset and drift rate data from the one or more time servers. In such instances, the internal synchronization of the network of NICs may guide the network of NICs toward a point of convergence such that the external synchronization may still be executed in light of the one or more NICs failing to receive the offset and drift rate data from the one or more time servers. While the internal synchronization might not be affected, the external synchronization may experience delays and may experience mild inter-NIC errors. In such instances, the inter-NIC errors may be negligible.

The execution of the external synchronization may occur at predetermined time periods, such as every few minutes. The duration of each external synchronization execution may occur within a predetermined time frame, such as one minute. For example, where the external synchronization takes one minute to complete, a majority of the time, such as fifty seconds, may be allotted for probing and measuring offsets and drift rates among the one or more time servers while the remaining time, such as ten seconds, may be allotted for propagation and adjustment. In some instances, the execution of external synchronization may experience time smearing. During time smearing, the duration of the external synchronization may extend over the predetermined time frame to avoid disrupting the internal synchronization.

Some external synchronization iterations may be executed to provide for faster convergence of the network of NICs to the UTC. For example, in some instances, the representative NICs or network devices may configure the external synchronization to tighten NIC-to-UTC synchronization such that the NIC-to-UTC offset is reduced to a predetermined time frame, such as less than $30\mu s$.

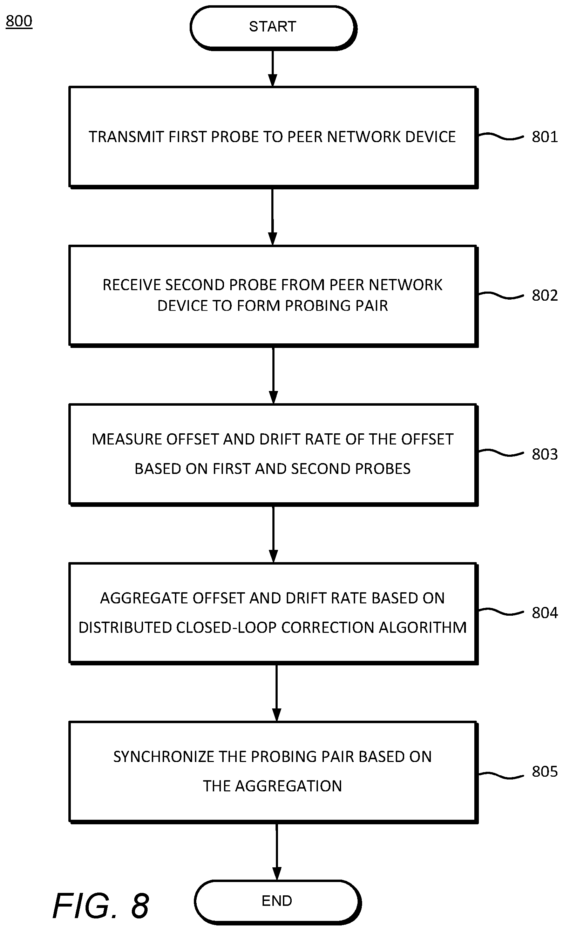

FIG. 8 illustrates a flow diagram for an example process or method of performing cloud synchronization at scale in data centers, in accordance with aspects of the disclosure. The operations described herein are presented in the current order by way of example, and the order is not meant to be limiting. Moreover, operations may be omitted from or added to the example method. The method and techniques described herein may be performed by one or more computing devices or components therein, such as a network device configured to probe peer network devices within a network of network devices, a time server, a NIC configured to probe peer NICs within a network of NICs, a transparent clock (TC), or the like.

At block 801, a network device may transmit to a peer network device, a first probe. The network device and the peer network device may be considered a probing pair. The first probe may include one or more timestamps, such as a timestamp indicating a first time that the first probe is transmitted to the peer network device and a timestamp indicating a second time that the first probe is received by the peer network device. The network device may continuously probe peer network devices to gather time information associated with each network device. The network device may identify the peer network devices using a probing graph. The probing graph may illustrate a totality of network devices and may depict pairs of network devices connected via an edge, referred to herein as a probing pair.

At block 802, the network device may receive, from the peer network device, a second probe. The second probe may include one or more timestamps, such as a timestamp indicating a third time that the second probe is transmitted to the network device and a timestamp indicating a fourth time that the second probe is received by the network device.

At block 803, the network device may measure, for each probing pair that it is a part of, an offset and a drift rate of the offset. The offset may indicate the time differences between the network device and the peer network device associated with a probing pair and the drift rate of the offset may indicate a rate of change of the offset. For example, based on repeated probing iterations, the network device may compare the offsets of each iteration to determine the drift rate. For each probing pair, the network device may perform a pairwise measurement using one or more linear regression algorithms. The linear mapping may be represented as $y=\alpha x + \beta$, where x may refer to the network device of a probing pair, y may refer to the peer network device of the probing pair, $\beta$ may refer to an offset between x and y, and $\alpha$ may refer to a drift rate of $\beta$. In some instances, the pairwise measurement may output a pairwise error value of a probing pair.

At block 804, the network device may aggregate the offset and drift rate based on a distributed swarm consensus algorithm. In other words, the network device may use the offset and drift rate to move the network of network devices toward a point of convergence, also referred to a consensus time or consensus swarm time dictated by swarm virtual clock (SVC) values. To do so, the network device may employ one of a basic swarm consensus or an accelerated swarm consensus.

The basic swarm consensus algorithm may provide for averaging pairwise error values to estimate an offset from the consensus time indicated by the SVC values. In some instances, the swarm consensus performed by the network device may be an accelerated swarm consensus that may feature a mesh-based clock synchronization mechanism. A mesh effect may correspond to data structure of network devices, where each network device is linked to another such that the data structure may be a closed loop. The network device may execute nested probe transmissions, where a probe may be transmitted to subsequent destination network devices after transmission to an initial destination network device. During nested probe transmissions, the data collected during each probe may be piggybacked onto the probe and transmitted to a subsequent destination network device such that the subsequent destination network device may retrieve time information associated with all previous destination network devices and may add its time information to the probe for delivery to the next destination network device. Doing so may reduce a number of probes needed to execute nested probe iterations.

Whether basic swarm consensus is used to synchronize the network devices or accelerated swarm consensus is used, the network device may identify a consensus time toward which the network of network devices should move.

At block 805, the network device may synchronize the probing pair. In particular, based on the described algorithm, a time indicated by the network device may be synchronized with a time indicated by the peer network device such that both the network device and the peer network device indicate the consensus time. In some instances, the times associated with each network device of the plurality of network devices may be synchronized such that each network device indicates the consensus time.

In some instances, the network device may be elected to serve as a representative network device for synchronizing the totality of network devices with a common clock indicating a universal time coordinate (UTC). As such, the representative network device may execute additional probe iterations between one or more time servers to determine a current time difference between the totality of network devices and the one or more time servers. Each probe iteration may piggyback time information gathered during each probe such that each destination network device may receive time information corresponding to all previous destination network devices. The time differences between the representative network device and each of the one or more time servers may be propagated to the totality of network devices.

The representative network device may aggregate the totality of information gathered by the probes to determine a totality of offsets and drift rates between the time associated with the representative network device and the times associated with the one or more time servers. The representative network device may determine a consensus offset and may determine a consensus time toward which the totality of network devices may be moving. In some instances, a point of convergence dictated by the consensus time may be the UTC. The representative network device may propagate the consensus time to the totality of network devices and the totality of network devices may adjust the time therein accordingly.

Any network device of the totality of network devices may be configured to perform device-to-device synchronization and the representative network device may be configured to perform device-to-UTC synchronization. Device-to-device synchronization may be performed at regularly timed intervals, while device-to-UTC synchronization may be performed during predetermined time frames so as not to interrupt the device-to-device synchronization.

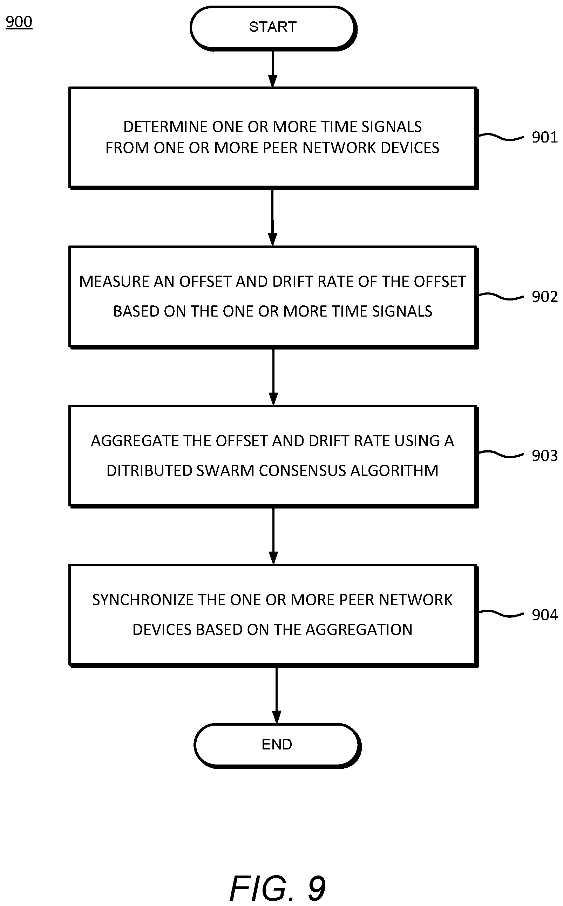

FIG. 9 illustrates a flow diagram for an example process or method of performing cloud synchronization at scale in data centers, in accordance with aspects of the disclosure. The operations described herein are presented in the current order by way of example, and the order is not meant to be limiting. Moreover, operations may be omitted from or added to the example method. The method and techniques described herein may be performed by one or more computing devices or components therein, such as a network device configured to obtain time signals associated with one or more peer network devices, the one or more peer network devices, or the like.

At block 901, a network device may determine one or more time signals associated with one or more peer network devices. In some embodiments, the network device may transmit data packets to each of the one or more peer network devices, where the data packets may include a request for a time signal associated with a peer network device. The network device may receive, from the one or more network devices, data packets indicating time signals associated with each peer network device. The network device may transmit and receive the data packets to/from the one or more peer network devices using one or more probes, as described above. While probing is described herein as a method of obtaining time signals from the one or more peer network devices, it should be noted that additional or alternative data transmissions methods may be used to request and receive time signals from the one or more peer network devices. Probing the one or more peer network devices is described herein by way of example, not limitation.

In some embodiments, and for illustration purposes, transmitting probes to the one or more peer network devices may include transmitting a first probe to a peer network device. The first probe may include two time signals, such as a time signal that the first probe is transmitted from the network device to the peer network device and a time signal that the first probe is received by the peer network device. The peer network device may transmit a second probe back to the network device. The second probe may include two time signals, such as a time signal that the second probe is transmitted from the peer network device to the network device and a time signal that the second probe is received by the network device. The network device may use the time signals of the first probe and the second probe to determine a time signal associated with the peer network device.

At block 902, the network device may use the determined time signals of the one or more peer network devices to measure an offset of the determined time signals and a drift rate of the offset. In particular, for each of the one or more peer network devices, the network device may determine an offset between a time signal indicated by the network device and a time signal indicated by a peer network device. The drift rate may indicate a rate of change of the offset. In some embodiments, the network device may compare the offset for each combination of the network device and a peer network device to determine the drift rate.

In some embodiments, the network device may generate a visual representation of the relationship between the network device and each peer network device. The visual representation may correspond to a topological or connected graph. A time signal associated with the network device and a time signal associated with a peer network device may be connected via an edge, indicating that the network device requested a time signal from the peer network device and that the network device received the requested time signal from the peer network device. In some embodiments, the network device and the peer network device connected via an edge may be referred to as a probing pair.

In some instances, a representation of a probing pair on a probing graph may indicate that the network devices associated with the probing pair periodically exchange probes. In some instances, the probing graph may be generated by a computing device and may be transmitted to the network device, and the network device may use the received probing graph to identify peer network devices.

The network device may use one or more regression models to determine, for each combination of the network device and a peer network device, a pairwise error value indicating a time difference between the time signal of the network device and the time signal of the peer network device. In some embodiments, the regression model may be a linear regression model and may determine pairwise error values using $y = \alpha x + \beta$, where x may refer to the time signal associated with the network device, y may refer to the time signal associated with the peer network device, $\beta$ may refer to an offset between x and y, and $\alpha$ may refer to a drift rate of $\beta$.

At block 903, the network device may aggregate the measured offsets and drift rate using a distributed swarm consensus algorithm. In particular, the network device may use at least one of basic swarm consensus or accelerated swarm consensus to drive the time signals associated with the network device and the one or more time signals associated with the one or more peer network devices toward a consensus swarm time dictated by swarm virtual clock (SVC) values.

Basic swarm consensus may include determining an average of the pairwise error values to estimate an offset from the consensus time indicated by the SVC values. Accelerated swarm consensus may use mesh-based clock synchronization to estimate the offset from the consensus time indicated by the SVC values. A mesh effect may correspond to a data structure of network devices, where each network device is linked to another such that the data structure may be a closed loop. In some embodiments, the network device may execute nested time signal requests, where the same request for a time signal may be transmitted to more than one peer network device. During nested time signal requests, the time signals collected during each visit to a peer network device may be piggybacked onto previously received time signals from previously visited peer network devices. A totality of time signals may be transmitted to additional peer network devices such that the additional peer network devices may read the received time signals and may add a time signal to the totality of time signals for delivery to the next peer network device.

Based on executing at least one of basic swarm consensus or accelerated swarm consensus is used, the network device may identify a consensus time toward which the network device and the one or more peer network devices should move.

At block 904, the network device may synchronize, based on the aggregation, the one or more peer network devices. In particular, the time signal associated with the network device and the one or more time signals associated with the one or more network devices may be synchronized with the consensus time determined at block 903.

While the internal synchronization and external synchronization of FIGS. 1-9 describe network devices (or NICs) that include a single clock therein, the internal synchronization and external synchronization may be performed using network devices (or NICs) that include more than one clock. In some instances, such as during the measurement phase of the described external synchronization, a measurement error may result in a tradeoff between a rapid consensus for convergence and stability during a steady state. Therefore, a network device (or NIC) may maintain separate clocks to achieve consensus across the totality of network devices. The separate clocks may include a real clock (RC), an internal-consensus clock (IC), and an external-consensus clock (EC). In some instances, the separate clocks may be virtual clocks.

An IC may be used for performing the described internal synchronization while an EC may be used for performing the described external synchronization. For example, a network device (or NIC) may periodically probe ICs within peer network devices (or NICs) to determine offsets and drift rates. The network device may use the determined offsets and drift rates to determine a consensus time toward which the totality of network devices (or NICs) should move. The ECs within the network devices (or NICs) may periodically probe the one or more time servers to determine a swarm offset and drift rate from a UTC indicated by the one or more time servers. The RC may be a smooth clock and may be used by different applications. The IC may be configured to rapidly achieve consensus among the network devices (or NICs) within the swarm and the RC may smoothly follow the IC. The EC may be configured to sync the swarm to the UTC indicated by the one or more time servers.

The IC and EC may be separated to account for different levels of errors and to maintain the stability of the IC while achieving rapid consensus with the EC. For example, the EC and IC may be separated to avoid a microsecond-level external error directly disrupting a less than 10ns internal synchronization accuracy.

A totality of ICs, such as each IC within each network device of the totality of network devices, may rapidly converge to a consensus and the corresponding RCs may smoothly follow the ICs. In a steady state, the RCs may be closer together than the ICs. However, ECs may experience occasional jumps due to microsecond-level errors that may be incurred during external measurement. The jumps may be pulled in by consensus among the ECs, thereby resulting in short-term spikes. As such, the microsecond-level errors may experience a limited time of impact. The time of impact may be further reduced as the ICs smoothly follow the ECs. ICs and RCs may remain tightly synced despite spikes from the ECs that they follow.

As such, maintaining separate clocks allows for a layered approach to achieving clock consensus. In some instances, the IC may be layered between the RC and EC. An error from one of the RC, IC, or EC may be absorbed by at least one of the other clock layers. Absorbing the errors of each layer prior to passing information to, for example, the RC may reduce a number of errors that are passed to the RC. In some instances, absorbing the errors from one clock layer may cause the remaining clock layers to mitigate the absorbed errors. For example, in some instances, a time server may experience a larger error and the ECs that probe the time server may inherit the error during external measurement. The error may be absorbed by at least the IC such that the error is mitigated prior to arriving at the RC, thereby absolving the RC of the error received by the EC.

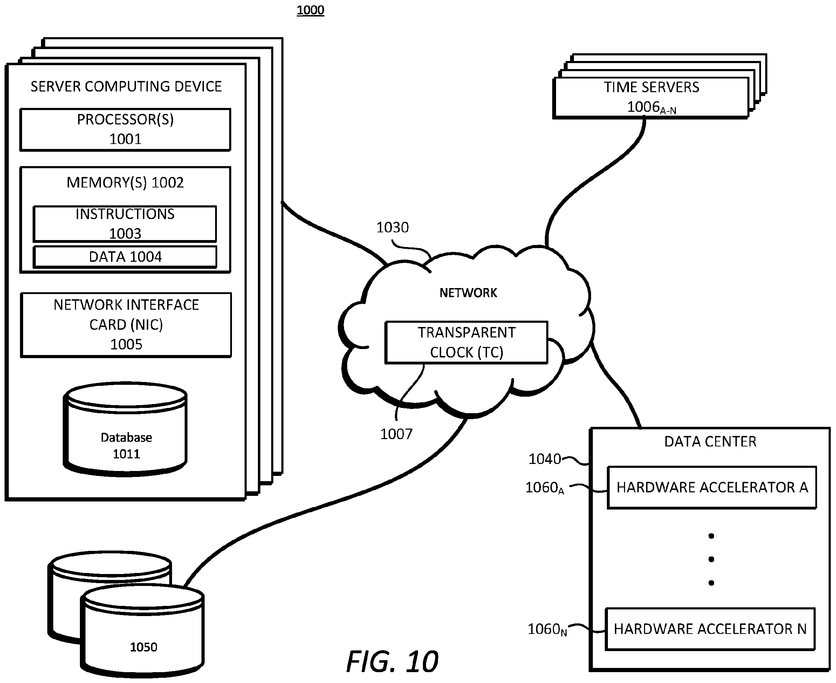

FIG. 10 illustrates a block diagram of an example computing environment performing cloud synchronization at scale in data centers, in accordance with aspects of the disclosure. Cloud synchronization may pertain to synchronizing time keeping components within a computing device or network device. One such example of a time keeping component may be a network interface card (NIC). Therefore, computing environment 1000 illustrates server computing devices 1010A-N, each of which include a NIC that may be used to execute the described method or process for executing cloud synchronization at scale in data centers. The described method or process may also be performed by additional server computing devices, such as one or more network devices. The one or more network devices may include NICs, switches, hosts, routers, gateways, wireless access points, hubs, bridges, repeaters, modems (DSL, cable), firewalls, or the like. NIC synchronization is described herein by way of example only and is not meant to be limiting.

Server computing devices 1010A-N may be communicatively coupled to one or more storage devices over a network. The storage devices may be a combination of volatile and non-volatile memory and may be at the same or different physical locations than the computing devices. For example, the storage devices may include any type of non-transitory computer readable medium capable of storing information, such as a hard-drive, solid state drive, tape drive, optical storage, memory card, ROM, RAM, DVD, CD-ROM, write-capable, and read-only memories. In some instances, database 1050 may store data transmitted across network 1030 and between server computing devices 1010A-N.

Server computing devices 1010A-N may include one or more processors and memory, such as processor(s) 1001 and memory(s) 1002, and NIC 1005, referred to herein as processors 1001A-N, memories 1002A-N, and NICs 1005A-N, respectively. Memories 1002A-N may include instructions 1003A-N and data 1004A-N. Memories 1002A-N may store information accessible by processors 1001A-N, including instructions 1003A-N that may be executed by processors 1001A-N. Memories 1002A-N may also include data 1004A-N that may be retrieved, manipulated, or stored by the processors 1001A-N. Memories 1002A-N may be a type of non-transitory computer readable medium capable of storing information accessible by processors 1001A-N, such as volatile and non-volatile memory. Processors 1001A-N may include one or more central processing units (CPUs), graphic processing units (GPUs), field-programmable gate arrays (FPGAs), and/or application-specific integrated circuits (ASICs).

Instructions 1003A-N may include one or more instructions that, when executed by processors 1001A-N, cause processors 1001A-N to perform actions defined by instructions 1003A-N. Instructions 1003A-N may be stored in object code format for direct processing by processors 1001A-N, or in other formats including interpretable scripts or collections of independent source code modules that are interpreted on demand or compiled in advance. Instructions 1003A-N may include instructions for performing clock synchronization.

Data 1004A-N may be retrieved, stored, or modified by processors 1001A-N in accordance with the instructions. Data 1004A-N may be stored in computer registers, in a relational or non-relational database as a table having a plurality of different fields and records, or as JSON, YAML, proto, or XML documents. Data 1004A-N may also be formatted in a computer-readable format such as, but not limited to, binary values, ASCII, or Unicode. Moreover, data 1004A-N may include information sufficient to identify relevant information, such as numbers, descriptive text, proprietary codes, pointers, references to data stored in other memories, including other network locations, or information that is used by a function to calculate relevant data.

NICs 1005A-N may be configured to communicate across server computing devices 1010A-N by transmitting data across network 1030. In some instances, NICs 1005A-N may communicate via probe transmissions across network 1030 where a probe may originate from a first NIC and may move to additional NICs to gather information during each probe iteration. NICs 1005A-N may be configured to communicate with time servers 1006A-N across network 1030. In particular, NICs 1005A-N may transmit probes to time servers 1006A-N and may transmit time information to and/or receive time information from time servers 1006A-N.

NICs 1005A-N may be further configured to communicate with transparent clock (TC) 1007 within network 1030 to gather information pertaining to probe path delay or queueing delays at one or more probe destinations, such as a destination NIC. In some instances, TC 1007 may be configured to determine probe path delays between NICs 1005A-N and time servers 1006A-N. In such instances, TC 1007 may communicate with time servers 1006A-N across network 1030.

Databases 1011A-N may store information gathered by server computing devices 1010A-N. For example, databases 1011A-N may store the time information gathered through probe iterations by NICs 1005A-N, determined offsets and drift rates, probing graphs used to determine the offsets and drift rates, swarm consensus analyses executed to determine a consensus time or point of convergence for NICs 1005A-N to perform NIC-to-NIC synchronization. Further, databases 1011A-N may store probe information gathered during probe iterations between NICs 1005A-N and time servers 1006A-N, offsets and drift rates between NICs 1005A-N and time servers 1006A-N, and swarm consensus analyses executed to determine a consensus time or point of convergence for NICs 1005A-N to perform NIC-to-UTC synchronization. In some instances, databases 1011A-N may store instructions 1003A-N and data 1004A-N.

Although FIG. 10 illustrates the processors and the memories as being within the server computing devices, components described herein may include multiple processors and memories that can operate in different physical locations and not within the same computing device. For example, some of the instructions and the data may be stored on a removable SD card and others within a read-only computer chip. Some or all of the instructions and data may be stored in a location physically remote from, yet still accessible by, the processors. Similarly, the processors may include a collection of processors that may perform concurrent and/or sequential operation. The computing devices may each include one or more internal clocks providing timing information, which may be used for time measurement for operations and programs run by the computing devices.

Server computing devices 1010A-N may be connected over network 1030 to data center 1040 housing any number of hardware accelerators. Data center 1040 may be one of multiple data centers or other facilities in which various types of computing devices, such as hardware accelerators, are located. Computing resources housed in the data center may be specified for performing clock synchronization at scale in data centers, as described herein.

Data center 1040 may include a plurality of hardware accelerators, such as hardware accelerators 1060A-N. Hardware accelerators 1060A-N can be any type of processor, such as a GPU, FPGA, or ASIC. Aspects of the disclosure may in some examples be implemented as specialized features of general-purpose processors, e.g., as part of a CPU or other processor configured to perform clock synchronization at scale in data centers, as described herein.

Server computing devices 1010A-N and data center 1040 may be capable of direct and indirect communication over the network. For example, using a network socket, server computing devices 1010A-N may connect to data center 1040 through an Internet protocol. In some instances, server computing devices 1010A-N may connect to a service operating within data center 1040. The devices and data center 1040 may set up listening sockets that may accept an initiating connection for sending and receiving information, such as time information gathered across NICs 1005A-N. The network itself may include various configurations and protocols including the Internet, World Wide Web, intranets, virtual private networks, wide area networks, local networks, and private networks using communication protocols proprietary to one or more companies. The network may support a variety of short- and long-range connections. The short- and long-range connections may be made over different bandwidths, such as 2.402 GHz to 2.480 GHz, commonly associated with the Bluetooth® standard, 2.4 GHz and 5 GHz, commonly associated with the Wi-Fi® communication protocol; or with a variety of communication standards, such as the LTE® standard for wireless broadband communication. The network may also support wired connections between the devices and the data center, including over various types of Ethernet connection.

It is understood that the aspects of the disclosure may be implemented according to a variety of different configurations and quantities of computing devices, including in paradigms for sequential or parallel processing, or over a distributed network of multiple devices. In some implementations, aspects of the disclosure may be performed on a single device connected to hardware accelerators configured to perform clock synchronization at scale.

The clock synchronization method described herein may provide tight clock synchronization that may be important in time drive industries, such as a financial exchange industry. Further, the described method may provide for effective and efficient congestion management in data center and across data configuration that might not rely on data center storage to execute functionalities hosted therein. Moreover, the described method may provide for tighter correctness guarantees for database operations. It is understood that the described method is not limited to use in data centers and databases only, but may be configured to support other data management configurations.

Aspects of the disclosed technology may take the form of a method, process, apparatus, system, or network device. Those examples may include one or more of the following features (e.g., F1 through F20):

F1. A network device configured to perform clock synchronization, the network device comprising:
one or more communication interfaces and one or more processors, wherein the one or more processors are configured to:

determine one or more time signals indicated by one or more peer network devices;
measure, based on the one or more time signals, an offset and a drift rate of the offset;
aggregate the offset and the drift rate using a distributed swarm consensus algorithm; and
synchronize, based on the aggregation, the one or more peer network devices.

F2. The network device of F1, wherein the one or more processors are further configured to:

elect a representative network device of one or more network devices; and

obtain, using the elected representative network device and after the network device is elected, a time signal indicating a universal time coordinate (UTC) from a time server.

F3. The network device of any one of F1 to F2, wherein determining the one or more time signals indicated by the one or more peer network devices further causes the one or more processors to transmit probes to the one or more peer network devices to obtain the one or more time signals.

F4. The network device of any one of F1 to F3, further comprising transmitting a first probe and a second probe comprising packets indicating timestamps, wherein:

the first probe indicates:

a first timestamp corresponding to a time the first probe is transmitted from the network device to a peer network device; and
a second timestamp corresponding to a time the first probe is received by the peer network device; and

the second probe indicates:

a third timestamp corresponding to a time the second probe is transmitted from the peer network device to the network device; and
a fourth timestamp corresponding to a time the second probe is received by the network device.

F5. The network device of any one of F1 to F4, wherein the one or more processors are further configured to receive a connected graph, wherein a representation of the network device and a peer network device connected via an edge indicates that the network device periodically obtains a time signal from the peer network device.

F6. The network device of any one of F1 to F5,
wherein the offset indicates one or more time differences between a time signal associated with the network device and the one or more time signals associated with the one or more peer network devices.

F7. The network device of any one of F1 to F6, wherein the drift rate of the offset indicates a rate of change of the offset.

F8. The network device of any one of F1 to F7, wherein the one or more processors are further configured to determine, using a regression model and for each combination of the network device and a peer network device of the one or more peer network devices, the offset and drift rate between a clock signal associated with the network device and a clock signal associated with the peer network device.

F9. The network device of any one of F1 to F8,

wherein the one or more processors are further configured to synchronize the network device and the one or more peer network devices using basic swarm consensus; and
wherein the basic swarm consensus comprises determining an estimated offset from multiple swarm virtual clock values based on the one or more time signals associated with the one or more peer network devices.

F10. The network device of any one of F1 to F9, wherein synchronizing the network device and the one or more peer network devices using the basic swarm consensus further causes the one or more processors to:

determine a local average of the offset and the drift rate of each peer network device of the one or more peer network devices; and
adjust a clock signal associated with the network device toward a common time indicated by the swarm virtual clock values.

F11. The network device of any one of F 1 to F 10,

wherein the one or more processors are further configured to synchronize the network device and the one or more peer network devices using accelerated swarm consensus; and
wherein the accelerated swarm consensus comprises determining an estimated offset from swarm virtual clock values based on:

the one or more time signals associated with the one or more peer network devices; and
one or more time signals associated with one or more nested peer network devices.

F12. The network device of any one of F1 to F11, wherein synchronizing the network device and the one or more peer network devices based on the accelerated swarm consensus further causes the one or more processors to:

perform, using a mesh effect, nested probing iterations between the network device, the one or more peer network devices, and the one or more nested peer network devices, wherein the one or more nested peer network devices correspond to additional peer network devices of the one or more peer network devices;
determine an offset from a common time indicated by the swarm virtual clock values; and
adjust a clock signal associated with the network device toward the common time indicated by the swarm virtual clock values.

F13. The network device of any one of F1 to F12, wherein the distributed swarm consensus algorithm is based on an average of pairwise measured offsets from the swarm virtual clock values and between:

the network device and a peer network device of the one or more peer network devices; and
the network device and a nested peer network device of the one or more nested peer network devices.

F14. A method for performing clock synchronization, the method comprising:

determine, by a network device, one or more time signals indicated by one or more peer network devices;
measure, by the network device and based on the one or more time signals, an offset and a drift rate of the offset;
aggregate, by the network device, the offset and the drift rate using a distributed swarm consensus algorithm; and
synchronize, by the network device and based on the aggregation, the one or more peer network devices.

F15. The method of F 14, further comprising:

obtaining, from one or more time servers, one or more time signals indicated by the one or more time servers;
determining a consensus universal time coordinate (UTC) based on the one or more time signals indicated by the one or more time servers;
determining the offset and the drift rate from the UTC; and
synchronizing the one or more peer network devices to the UTC.

F16. The method of any one of F14 to F15, further comprising transmitting, by the network device, probes to the one or more peer network devices to obtain the one or more time signals indicated by the one or more peer network devices.

F17. The method of any one of F 14 to F 16, further comprising transmitting a first probe and a second probe comprising packets indicating timestamps, wherein:

the first probe indicates:

a first timestamp corresponding to a time the first probe is transmitted from the network device to a peer network device; and
a second timestamp corresponding to a time the first probe is received by the peer network device; and

the second probe indicates:

a third timestamp corresponding to a time the second probe is transmitted from the peer network device to the network device; and
a fourth timestamp corresponding to a time the second probe is received by the network device.

F18. The method of any one of F14 to F17, further comprising synchronizing the network device and the one or more peer network devices using basic swarm consensus, wherein the synchronizing comprises:

determining a local average of the offset and the drift rate of each peer network device of the one or more peer network devices, wherein the local average corresponds to a common time indicated by swarm virtual clock values; and

adjusting a clock signal associated with the network device toward the common time indicated by the swarm virtual clock values.

F19. The method of any one of F14 to F18, further comprising synchronizing the network device and the one or more peer network devices based on accelerated swarm consensus, wherein the synchronizing comprises:

performing, using a mesh effect, nested probing iterations between the network device, the one or more peer network devices, and one or more nested peer network devices, wherein the one or more nested peer network devices correspond to additional peer network devices of the one or more peer network devices;

determining, for each peer network device and each nested peer network device, an offset from a common time indicated by swarm virtual clock values; and

adjusting a clock signal associated with the network device toward the common time indicated by the swarm virtual clock values.

F20. A system for performing clock synchronization, the system comprising:

a plurality of network devices; and
one or more peer network devices,
wherein the plurality of network devices comprises the one or more peer network devices, and
wherein a network device comprises one or more processors configured to:

determine one or more time signals indicated by the one or more peer network devices;
measure, based on the one or more time signals, an offset and a drift rate of the offset;
aggregate the offset and the drift rate using a distributed swarm consensus algorithm; and
synchronize, based on the aggregation, the one or more peer network devices.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as a TensorFlow framework.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

**Claims**

1. A network device configured to perform clock synchronization, the network device comprising:
   one or more communication interfaces and one or more processors, wherein the one or more processors are configured to:

   determine one or more time signals indicated by one or more peer network devices;
   measure, based on the one or more time signals, an offset and a drift rate of the offset;
   aggregate the offset and the drift rate using a distributed swarm consensus algorithm; and
   synchronize, based on the aggregation, the one or more peer network devices.

**2.** The network device of claim 1, wherein the one or more processors are further configured to:

elect a representative network device of one or more network devices; and
obtain, using the elected representative network device and after the network device is elected, a time signal indicating a universal time coordinate (UTC) from a time server.

**3.** The network device of claim 1 or claim 2, wherein determining the one or more time signals indicated by the one or more peer network devices further causes the one or more processors to transmit probes to the one or more peer network devices to obtain the one or more time signals.

**4.** The network device of claim 3, wherein the one or more processors are further configured to transmit a first probe and a second probe comprising packets indicating timestamps, wherein:

the first probe indicates:

a first timestamp corresponding to a time the first probe is transmitted from the network device to a peer network device; and
a second timestamp corresponding to a time the first probe is received by the peer network device; and

the second probe indicates:

a third timestamp corresponding to a time the second probe is transmitted from the peer network device to the network device; and
a fourth timestamp corresponding to a time the second probe is received by the network device.

**5.** The network device of one of claims 1 to 4, wherein the one or more processors are further configured to receive a connected graph, wherein a representation of the network device and a peer network device connected via an edge indicates that the network device periodically obtains a time signal from the peer network device; and/or

wherein the offset indicates one or more time differences between a time signal associated with the network device and the one or more time signals associated with the one or more peer network devices; and/or
wherein the drift rate of the offset indicates a rate of change of the offset; and/or
wherein the one or more processors are further configured to determine, using a regression model and for each combination of the network device and a peer network device of the one or more peer network devices, the offset and drift rate between a clock signal associated with the network device and a clock signal associated with the peer network device.

**6.** The network device of one of claims 1 to 5,

wherein the one or more processors are further configured to synchronize the network device and the one or more peer network devices using basic swarm consensus; and
wherein the basic swarm consensus comprises determining an estimated offset from multiple swarm virtual clock values based on the one or more time signals associated with the one or more peer network devices; and

wherein synchronizing the network device and the one or more peer network devices using the basic swarm consensus optionally further causes the one or more processors to:

determine a local average of the offset and the drift rate of each peer network device of the one or more peer network devices; and
adjust a clock signal associated with the network device toward a common time indicated by the swarm virtual clock values.

**7.** The network device of one of claims 1 to 6,

wherein the one or more processors are further configured to synchronize the network device and the one or more peer network devices using accelerated swarm consensus; and
wherein the accelerated swarm consensus comprises determining an estimated offset from swarm virtual clock values based on:

the one or more time signals associated with the one or more peer network devices; and
one or more time signals associated with one or more nested peer network devices.

8. The network device of claim 7, wherein synchronizing the network device and the one or more peer network devices based on the accelerated swarm consensus further causes the one or more processors to:

perform, using a mesh effect, nested probing iterations between the network device, the one or more peer network devices, and the one or more nested peer network devices, wherein the one or more nested peer network devices correspond to additional peer network devices of the one or more peer network devices;
determine an offset from a common time indicated by the swarm virtual clock values; and
adjust a clock signal associated with the network device toward the common time indicated by the swarm virtual clock values.

9. The network device of claim 8, wherein the distributed swarm consensus algorithm is based on an average of pairwise measured offsets from the swarm virtual clock values and between:

the network device and a peer network device of the one or more peer network devices; and
the network device and a nested peer network device of the one or more nested peer network devices.

10. A method for performing clock synchronization, the method comprising:

determine, by a network device, one or more time signals indicated by one or more peer network devices;
measure, by the network device and based on the one or more time signals, an offset and a drift rate of the offset;
aggregate, by the network device, the offset and the drift rate using a distributed swarm consensus algorithm; and
synchronize, by the network device and based on the aggregation, the one or more peer network devices.

11. The method of claim 10, further comprising:

obtaining, from one or more time servers, one or more time signals indicated by the one or more time servers;
determining a consensus universal time coordinate (UTC) based on the one or more time signals indicated by the one or more time servers;
determining the offset and the drift rate from the UTC; and
synchronizing the one or more peer network devices to the UTC.

12. The method of claim 10 or claim 11, further comprising transmitting, by the network device, probes to the one or more peer network devices to obtain the one or more time signals indicated by the one or more peer network devices.

13. The method of claim 12, further comprising transmitting a first probe and a second probe comprising packets indicating timestamps, wherein:

the first probe indicates:

a first timestamp corresponding to a time the first probe is transmitted from the network device to a peer network device; and
a second timestamp corresponding to a time the first probe is received by the peer network device; and

the second probe indicates:

a third timestamp corresponding to a time the second probe is transmitted from the peer network device to the network device; and
a fourth timestamp corresponding to a time the second probe is received by the network device.

14. The method of one of claims 10 to 13, further comprising synchronizing the network device and the one or more peer network devices using basic swarm consensus, wherein the synchronizing comprises:

determining a local average of the offset and the drift rate of each peer network device of the one or more peer network devices, wherein the local average corresponds to a common time indicated by swarm virtual clock values; and

adjusting a clock signal associated with the network device toward the common time indicated by the swarm virtual clock values; or

wherein the method further comprises synchronizing the network device and the one or more peer network devices based on accelerated swarm consensus, wherein the synchronizing comprises:

performing, using a mesh effect, nested probing iterations between the network device, the one or more peer network devices, and one or more nested peer network devices, wherein the one or more nested peer network devices correspond to additional peer network devices of the one or more peer network devices; determining, for each peer network device and each nested peer network device, an offset from a common time indicated by swarm virtual clock values; and adjusting a clock signal associated with the network device toward the common time indicated by the swarm virtual clock values.

15. A system for performing clock synchronization, the system comprising:

a plurality of network devices; and one or more peer network devices,

wherein the plurality of network devices comprises the one or more peer network devices, and wherein a network device comprises one or more processors configured to:

determine one or more time signals indicated by the one or more peer network devices; measure, based on the one or more time signals, an offset and a drift rate of the offset; aggregate the offset and the drift rate using a distributed swarm consensus algorithm; and synchronize, based on the aggregation, the one or more peer network devices.

*FIG. 1*

EP 4 554 120 A1

FIG. 2

FIG. 3

EP 4 554 120 A1

y = Clock B

400

$$y = \alpha x + \beta$$

x = Clock A

*FIG. 4*

*FIG. 5*

FIG. 6

FIG. 7

800

START

TRANSMIT FIRST PROBE TO PEER NETWORK DEVICE — 801

RECEIVE SECOND PROBE FROM PEER NETWORK
DEVICE TO FORM PROBING PAIR — 802

MEASURE OFFSET AND DRIFT RATE OF THE OFFSET
BASED ON FIRST AND SECOND PROBES — 803

AGGREGATE OFFSET AND DRIFT RATE BASED ON
DISTRIBUTED CLOSED-LOOP CORRECTION ALGORITHM — 804

SYNCHRONIZE THE PROBING PAIR BASED ON
THE AGGREGATION — 805

END

*FIG. 8*

900

START

DETERMINE ONE OR MORE TIME SIGNALS
FROM ONE OR MORE PEER NETWORK DEVICES                    901

MEASURE AN OFFSET AND DRIFT RATE OF THE OFFSET
BASED ON THE ONE OR MORE TIME SIGNALS                    902

AGGREGATE THE OFFSET AND DRIFT RATE USING A
DITRIBUTED SWARM CONSENSUS ALGORITHM                     903

SYNCHRONIZE THE ONE OR MORE PEER NETWORK
DEVICES BASED ON THE AGGREGATION                         904

END

*FIG. 9*

**FIG. 10**

EP 4 554 120 A1

Europäisches
Patentamt
European
Patent Office
Office européen
des brevets

# EUROPEAN SEARCH REPORT

**Application Number**

EP 24 21 1086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL KEVIN MAGGS ET AL: "Consensus Clock Synchronization for Wireless Sensor Networks", IEEE SENSORS JOURNAL, IEEE, USA, vol. 12, no. 6, 1 June 2012 (2012-06-01), pages 2269-2277, XP011442619, ISSN: 1530-437X, DOI: 10.1109/JSEN.2011.2182045 * page 2269, left-hand column, paragraph 1 - page 2270, left-hand column, paragraph 1 * * page 2270, right-hand column, paragraph 8 - paragraph 5; figure 2 * * page 2272, right-hand column, paragraph 2 - page 2274, right-hand column, paragraph 3; figures 3,4 * ----- | 1-15 | INV. H04J3/06 |
| X | BERTASI P ET AL: "PariSync: Clock synchronization in P2P networks", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12 October 2009 (2009-10-12), pages 1-6, XP031570872, ISBN: 978-1-4244-4391-8 * the whole document * ----- | 1-15 | |
| | -/-- | | **TECHNICAL FIELDS SEARCHED (IPC)** H04J |

The present search report has been drawn up for all claims

| Place of search | Date of completion of the search | Examiner |
|---|---|---|
| The Hague | 26 February 2025 | Roldán Andrade, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................................
& : member of the same patent family, corresponding
document

EPO FORM 1503 03.82 (P04C01)

page 1 of 2

**Application Number**

EP 24 21 1086

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Matthew Yew Mun Mah: "TIME-BASED LOCATION TECHNIQUES USING INEXPENSIVE, UNSYNCHRONIZED CLOCKS IN WIRELESS NETWORKS", , 1 January 2011 (2011-01-01), pages 1-183, XP055400746, Retrieved from the Internet: URL:http://drum.lib.umd.edu/bitstream/handle/1903/11695/Mah_umd_0117E_12114.pdf?sequence=1&isAllowed=y [retrieved on 2017-08-23] * Chapters 4, 5 and 8 * | 1-15 | |
| X | WU JIE ET AL: "Cluster-Based Consensus Time Synchronization for Wireless Sensor Networks", IEEE SENSORS JOURNAL, IEEE, USA, vol. 15, no. 3, 1 March 2015 (2015-03-01), pages 1404-1413, XP011567783, ISSN: 1530-437X, DOI: 10.1109/JSEN.2014.2363471 [retrieved on 2014-12-11] * abstract * * Sections I to IV * | 1-15 | **TECHNICAL FIELDS SEARCHED (IPC)** |
| X | NIU YUQING ET AL: "Consensus tracking-based clock synchronization for the Internet of Things", SOFT COMPUTING, SPRINGER BERLIN HEIDELBERG, BERLIN/HEIDELBERG, vol. 26, no. 13, 14 May 2022 (2022-05-14), pages 6415-6428, XP037875472, ISSN: 1432-7643, DOI: 10.1007/S00500-022-07165-X [retrieved on 2022-05-14] * the whole document * | 1-15 | |

The present search report has been drawn up for all claims

| Place of search | Date of completion of the search | Examiner |
|---|---|---|
| The Hague | 26 February 2025 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)